Europäisches Patentamt

European Patent Office

Office européen des brevets

(11) Publication number: **0 143 131**
A1

(12) # EUROPEAN PATENT APPLICATION

(21) Application number: 83307887.6

(22) Date of filing: 22.12.83

(51) Int. Cl.⁴: **C 08 J 5/18, C 08 L 23/16, C 08 L 23/02**

(30) Priority: 30.11.83 JP 224287/83

(43) Date of publication of application: 05.06.85
Bulletin 85/23

(84) Designated Contracting States: DE FR GB NL

(71) Applicant: BRIDGESTONE TIRE COMPANY LIMITED,
10-1, Kyobashi 1-Chome Chuo-Ku, Tokyo (JP)
Applicant: MITSUI PETROCHEMICAL INDUSTRIES,
LTD., 2-5, Kasumigaseki 3-chome Chiyoda-ku,
Tokyo 100 (JP)

(72) Inventor: Aoki, Takao, 42-2, Inuyama-cho Totsuka-ku,
Yokohama-shi Kanagawa-ken (JP)
Inventor: Umezawa, Makoto, 1610-36, Ninomiya,
Akigawa-shi Tokyo (JP)
Inventor: Matsuda, Akira, 872-4, Saihiro, Ichihara-shi
Chiba-ken (JP)
Inventor: Abe, Shunji, 2, Muronoki-cho 1-chome,
Iwakuni-shi Yamaguchi-ken (JP)

(74) Representative: Geering, Keith Edwin et al, REDDIE &
GROSE 16 Theobalds Road, London WC1X 8PL (GB)

(54) Water-proofing sheet and application process thereof.

(57) Water-proofing sheets formed from a composition comprising:
(A) 75 to 35 parts by weight of a partially cured thermoplastic elastomer obtained by the dynamic heat-treatment
of a mixture of 90 to 40 parts by weight of a monoolefin
copolymer rubber and 10 to 60 parts by weight of a poly-
olefin plastic and
(B) 25 to 65 parts by weight of an ethylene polymer
having a density of 0.910 to 0.940 g/cm³.
These sheets have excellent characteristics and can be
advantageously united with each other by melt bonding, on
a construction site, under pressure while heating.

0143131

WATER-PROOFING SHEET AND APPLICATION PROCESS THEREOF

The present invention relates to a water--proofing sheet

The present invention also relates to a process for applying water-proofing sheets over a substrate by melt-bonding (or hot air welding) them together under pressure while heating.

As is well-known in the art, various bituminous (or asphalt) water-proofing and sheet water-proofing applications systems are generally utilized for water--proofing on the tops of buildings, the walls of subways, tunnels, and dams, the bottoms of ponds of golf courses, the bottoms and walls of irrigation channels, waste disposal places, and waste water treatment ponds.

Bituminous water-proofing methods are most widely used for water-proofing at present. However, bituminous water-proofing methods involve disadvantages in that the application processes are troublesome due to the necessity of multi-layer finishes and the use of hot molten bitumen, and also that bitumen itself has poor weather resistance, heat resistance, cold resistance, and substrate fittability.

On the other hand, according to the sheet water-proofing methods, a water-proofing layer is integrated over a substrate by adhering the sheets to each other and the sheets to the substrate, on a construction site, unlike the bituminous water-proofing methods. Typical examples of water-proofing sheets conventionally used are rubber mixture sheets obtained from butyl rubber/ethylene-propylene-diene copolymer rubber and polyvinyl chloride sheet. The rubber mixture sheets have satisfactory characteristics such as weather resistance, ozone resistance, heat resistance, cold resistance, and substrate fittability, but also have disadvantages in that the adhesion properties thereof are poor and the problem of water leakage from the bonded portions of the sheets often occurs. Furthermore, a series of many steps, including a kneading step for mixing a rubber component with a filler such as carbon black, a sheeting step using, for example, a calendering process, and a vulcanizing step, are required for the production thereof and, as a result, the cost thereof becomes inevitably high.

On the other hand, the polyvinyl chloride sheets can be readily manufactured by any sheeting means such as a calendering machine and an extruder, but this involves the disadvantages of poor weather resistance, cold resistance, and heat resistant properties.

In accordance with the present invention, there is provided a water-proofing sheet formed from a composition comprising:

(A) 75 to 35 parts by weight of a partially cured thermoplastic elastomer obtained by the dynamic heat-treatment of a mixture of 90 to 40 parts by weight of a monoolefin copolymer rubber (a) and 10 to 60 parts by weight of a polyolefin plastic (b), and

(B) 25 to 65 parts by weight of an ethylene polymer having a density of 0.910 to 0.940 g/cm$^3$.

In accordance with the present invention, there is also provided a process for applying a water-proofing sheet formed from a composition comprising:

(A) 75 to 35 parts by weight of a partially cured thermoplastic elastomer obtained by the dynamic heat-treatment of a mixture of 90 to 40 parts by weight of a monoolefin copolymer rubber (a) and 10 to 60 parts by weight of a polyolefin plastic (b), and

(B) 25 to 65 parts by weight of an ethylene polymer having a density of 0.910 to 0.940 g/cm$^3$.

This process comprises:

(i) laying the water-proofing sheets over a substrate in such a manner that the water-proofing sheets at least partially overlap each other; and

(ii) allowing the water-proofing sheets to be united with each other at the overlapped portion by melt-bonding the overlapped portion of the water-proofing sheets under pressure while heating.

The water-proofing sheets according to the present invention have the following desired properties:

(1) The sheets can be readily formed by a simple processing method such as a calendering method or an extrusion method;

(2) The sheets have desired characteristics such as weather resistance, heat resistance, cold resistance, ozone resistance, and substrate fittability;

(3) The sheets can be simply bonded to each other by, for example, a hot melt method and a heat seal method;

(4) The sheets have low initial modulus and are soft; and

(5) The sheets satisfy the specifications of vulcanized type synthetic polymer

roofings defined in JIS (Japanese Industrial Standard) A-6008 (1981).

The partially cured thermoplastic elastomers (A) contained in the composition are those obtained by the dynamic heat-treatment of a mixture of about 90 to 40 parts by weight, preferably 80 to 50 parts by weight, of a monoolefin copolymer rubber (a), and about 10 to 60 parts by weight, preferably 20 to 50 parts by weight, of a polyolefin plastic (b). The preparations of these partially cured plastic elastomers are disclosed in, for example, U.S. Patent Nos. 3806558 and 4212787.

That is, amorphous random elastomeric copolymers capable of being cured, in the presence of an organic peroxide, upon heating while mixing and kneading, to form rubber-like products having reduced or substantially no flowability, such as, ethylene-propylene copolymer rubber, ethylene-propylene-non-conjugated diene, ethylene-butene copolymer rubber, ethylene-butadiene copolymer rubber, and other copolymer rubbers mainly containing olefins are used as the monoolefin copolymer rubber (a) in the present invention. In the case of non-conjugated dienes being copolymerized, dicyclopentadiene, 1,4-hexadiene, cyclooctadiene, methylene norbornene, and ethylidene norbornene are used. Of the non-conjugated diene copolymer rubbers, the use of ethylene-propylene-5-ethylidene-2-norbornene copolymer rubber is especially desirable for the reason that the resultant thermoplastic elastomer has excellent heat resistance, tensile characteristics, and impact resilience. The Mooney viscosity $ML_{1+4}$ (100°C) of the monoolefin type copolymer rubber (a) is generally about 10 to 170, preferably about 40 to 80.

The polyolefin plastics (b) used in the present invention are those capable of being decomposed, in the presence of an organic peroxide, upon heating while mixing and kneading, to form the degradated products having a reduced molecular weight and having an increased

- 5 -                    0143131

resin flowability. Examples of the polyolefin type
plastics are isotactic polypropylene, copolymers of
propylene, and a small amount of other alpha-olefins
such as propylene-ethylene copolymer, propylene-1-butene
copolymer, propylene-1-hexene copolymer, and propylene-4-
-methyl-1-pentene copolymer. The melt index of the
polyolefin type plastics is generally about 0.1 to 50,
preferably about 5 to 20, determined according to
ASTM-D-1238-65T at 230°C.

The polyolefin plastics are used in an amount of
about 10 to 60 parts by weight, preferably about 20
to 50 parts by weight, based on 100 parts by weight of
the total amount of the monoolefin copolymer rubber (a)
and the polyolefin plastics (b). When the compounding
amount of the polyolefin plastics is more than 60 parts
by weight, the flexibility and impact resilience of the
resultant thermoplastic elastomers are impaired.
Conversely, when the compounding amount of the polyolefin
plastics (b) is less than 10 parts by weight, the heat
resistance and flowability of the resultant thermoplastic
elastomers are impaired.

The partial curing by dynamic heat-treatment of the
mixture of the monoolefin copolymer rubber (a) and the
polyolefin plastic (b) can be carried out by mixing or
kneading the mixture, under molten conditions, in the
presence of about 0.05 to 1.0 parts by weight, preferably
about 0.1 to 0.5 parts by weight, based on 100 parts by
weight of the mixture to be treated, of an organic
peroxide. Typical examples of organic peroxides are
dicumyl peroxide, di-tert.-butyl peroxide, and 1,3-
-bis(tert.-butyl peroxy isopropyl) benzene. The organic
peroxide is added to the mixture to be treated in the
amount mentioned above and then the resultant mixture is
kneaded, using any conventional mixer or kneader, at a
temperature such that the half-life period of the
organic peroxide is less than 1 minute, for example, at
a temperature of about 150°C to about 280°C, preferably about 170°C to about 240°C, for about 1 to 20 minutes, preferably about 3 to 10 minutes. The partial curing should be effected to such an extent that the gel content of the resultant thermoplastic elastomer is 20% to 99% by weight, preferably 30% to 98% by weight and, more preferably 50% to 96% by weight. The gel content is determined by measuring the amount of the non-soluble content after soaking a sample in cyclohexane at a temperature of 350°C for 44 hours. The partially cured thermoplastic elastomer thus obtained desirably has a density of 0.87 to 0.90 $g/cm^3$.

The mineral oil type softeners may be incorporated into the mixture of the monoolefin copolymer rubber (a) and the polyolefin plastic (b), in an amount of about 50 parts by weight based on 100 parts by weight of the mixture, prior to or during the partial curing. The mineral oil type softeners used in the present invention include high boiling point pertroleum fractions, preferably parafinic, naphthenic, and aromatic petroleum oil. The use of the mineral oil type softeners increases the flexibility and elasticity of the partially cured thermoplastic elastomer by decreasing the hardness thereof, and also accelerates the dispersion of a filler, if used, in the water-proofing sheet composition.

In addition to the mineral oil type softeners, peroxide-non-curable hydrocarbon type materials such as polyisobutylene rubber, butyl rubber, propylene-ethylene copolymer rubber containing 70% or more of propylene, and atactic polypropylene can also be added to the mixture, prior to the dynamic heat-treatment. These mineral oil type softeners and the rubbery materials may be added not only prior to or during the dynamic heat treatment but also during the mixing of the thermoplastic elastomer (A) and the ethylene polymer (B).

The ethylene polymers (B) having a density of 0.910 to 0.940 $g/cm^2$, preferably 0.915 to 0.935 $g/cm^2$, include ethylene homopolymer and copolymers. In particular, ethylene copolymers comprising 90 mole% to 99.5 mole% of ethylene and the remainder of at least one alpha-olefin having 4 or more carbon atoms such as 1-butene, 1-pentene, 1-hexene, 4-methyl-1-pentene, 1-octene, 1-decene, 1-dodecene, and 1-tetradecene, preferably at least one alpha-olefin having 4 to 8 carbon atoms. Furthermore, a small amount of propylene may also be copolymerized together with ethylene and the above-mentioned alpha-olefin as long as the desired objects of the present invention are not impaired. These copolymers have preferably a melt index of about 0.1 to 20.

According to the present invention, 75 to 35 parts by weight of the thermoplastic elastomer (A) and 25 to 65 parts by weight of the ethylene polymer (B) are mixed together. When the amount of the thermoplastic elastomer (A) is 35 parts by weight or more, the resultant sheet has better heat adhesion properties. However, when the amount of the thermoplastic elastomer becomes more than about 75 parts by weight, the temperature dependency of the physical properties of the resultant sheet becomes undesirably large (i.e., the rate of changes in the physical properties with temperature is large) and the physical properties at a high temperature (i.e., 60°C or more) become poor.

On the other hand, when the high-density polyethylene having a density of more than 0.940 g/cm$^3$ is used as the ethylene polymer, the heat adhesion properties of the resultant sheet become poor. Conversely, when the ethylene polymer having a density of less than 0.910 g/cm$^3$ is used, the physical properties (e.g., the tensile strength at a high temperature) of the resultant sheet are undesirably decreased.

In accordance with the present invention, in order to increase the density of the water-proofing sheet and to reduce the temperature dependency of the physical properties of the sheet, a filler may be added to the water-proofing sheet composition in an amount of up to about 40 parts by weight, desirably 10 to 35 parts by weight, based on 100 parts by weight, of the total amount of the thermoplastic elastomer (A) and the ethylene polymer (B). Examples of the fillers are carbon black, clay, talc, heavy calcium carbonate, kaolin, diatomaceous earth, silica, alumina, asbestos, graphite, and glass fibers. Of these fillers, the use of carbon black or heavy calcium carbonate is particularly desirable.

The water-proofing sheet of the invention preferably has a density of 0.8 to 1.1 $g/cm^3$, more preferably 0.90 to 1.05 $g/cm^3$. The density of the water-proofing sheet can be readily adjusted by the addition of the above-mentioned filler.

The water-proofing sheet forming the composition according to the present invention can be prepared by mixing, under molten conditions, the partially thermoplastic cured elastomer (A), the ethylene polymer (B) and, optionally, the filler and the mineral oil type softener at a temperature of about 150°C to about 250°C, preferably about 170°C to about 220°C, for about 1 to 30 minutes in a conventional mixing or kneading apparatus, such as a Banbury mixer, a single or twin screw extruder, a mixing roll, a kneader, or a continuous mixer. The mixing or kneading is desirably carried out under an inert gas atmosphere (e.g., nitrogen gas, carbon dioxide gas). The order of the mixing of the components is not critical. Furthermore, any conventional ingredients such as heat stabilizers, weather proofing agents, anti-aging agents (or antioxidants), and coloring agents may be added to the water-proofing sheet composition at any stage of the preparation thereof.

The water-proofing sheet composition according to the present invention can be processed to form a sheet by using any conventional sheeting technique. That is, the molten resin composition is readily extruded through a T die at a temperature of about 180°C to about 250°C to form a sheet having a thickness of, for example, about 0.5 to 7 mm. Alternatively, the molten composition, which is heated to a temperature more than the softening point thereof in a Banbury mixer or a mixing roll, is formed in a calendering roll to obtain sheets having a relatively thin thickness, a few or several sheets of which are melt-laminated together in an embossing roll.

The water-proofing sheets according to the present invention have good physical properties and processability as well as good applicability, and can be advantageously applied over a substrate. For example, water-proofing sheets having a size of about 20 m x 1 m x 1.5 mm are prefabricated in a factory and are laid over a substrate in such a manner that the water-proofing sheets at least partially overlap each other. The overlapped end portions (or side-end portions), of the sheets are integrally united with each other to form a membrane, on a construction site, by melt-bonding the sheets under pressure by means of, for example, a hot air machine. Alternatively, the water-proofing sheets are previously heat-sealed to form a membrane having a width of about 2 to 20 m by means of a hot air machine or a heat sealer at a factory and are then applied over a substrate. The water-proofing sheets according to the present invention can be advantageously applied to substrates where conventional various water-proofing sheets are applied. That is, the water-proofing sheets according to the present invention can be advantageously applied for water-proofing to, for example, the tops of buildings, waste disposal places, ponds of golf courses, irrigation channels, waste water treatment ponds, eel raising ponds, dams, and tunnels.

The melt-bonding of the water-proofing sheets according to the present invention can be carried out as follows. For example, the water-proofing sheets are laid over a substrate on a construction site in such a manner that the end portions of the water-proofing sheets are overlapped and the overlapped portions are then melt-bonded under pressure by means of a hot air machine. Thus, a continuous integrated water-proofing membrance having a high bonding strength is formed. The melt bonding is generally carried out by heating the surfaces of the overlapped water-proofing sheets to be bonded together at a temperature of more than a melting or softening point of the water-proofing sheet material but less than the heat deterioration temperature thereof. The preferable surface temperature was about 160°C to about 220°C. The melt bonding is carried out under a pressure of, generally, 5 kg/cm$^2$ or more, preferably 15 to 25 kg/cm$^2$. The melt bonding of the water-proofing sheets on a construction site is generally carried out by means of an automatic hot air welding machine. That is, overlapped portions of the water-proofing sheets are set between double pressure rollers of the welding machine and the welding machine are automatically driven in this condition, while hot air is fed between the overlapped sheets. Thus, the integral water-proofing membrane is formed from the water-proofing sheets. Alternatively, the overlapped portions of the water-proofing sheets can be melt-bonded together by blowing hot air between the overlapped sheets from a portable type hot air generator, while the sheets are pressed together by means of a hand pressure roller.

According to the present invention, the following advantages can be obtained over the conventional techniques:

1. The adhesion strength of the melt-bonded portion of the water-proofing sheets according to the present invention can be superior to those of conventional commercially available vulcanized rubber type water-proofing sheets (EPDM: butyl rubber = 7:3) which are bonded together by adhesives, as shown in the following table.  The thickness of both sheets is 1.5 mm.

Table

| Sheet | Shear strength (kg/25.4 mm) | Peel strength (kg/25.4 mm) |
|---|---|---|
| Sheet according to the present invention (heat melt bonding) | > 22 | > 15 |
| Commercially available vulcanized rubber sheet<br><br>1) Butyl type solvent adhesive | 4 - 5 | 1.5 |
| 2) Epoxy resin type adhesive | 6 - 8 | 3.6 |
| 3) Nitrile rubber type adhesive | 0.1 - 0.3 | 0.1 |

2.    According to the present invention, the water-proofing sheets can be advantageously melt-bonded by adjusting   hot air temperature and   roller speed without being affected by   ambient temperature.  Thus, the present water-proofing technique can be available in any season.  Contrary to this, conventional adhesive application processes involve problems in that solvents contained in the adhesive are difficult to be evaporated at a temperature of, for example, 5°C or less and, therefore, this type of water-proofing application is not suitable during the winter.

3.    The melt bonding processes according to the present invention can be advantageously applied by adjusting   hot air temperature, without necessitating a    previous drying step, even when the heat bonding portions of the water-proofing sheets are wet due to fine rain or subterranean water.  Contrary to this, according to the conventional adhesion process, a

- 12 -

0143131

pre-drying step is required on a construction site when the water-proofing sheets are wet and, therefore, the application work efficiency is markedly decreased. Thus, the present melt bonding application process can be directly carried out under the conditions of, for example, fine rain, whereas the conventional adhesive application process cannot be directly applied under such conditions. This difference is significant in view of the fact that the water-proofing application process is carried on outdoors.

4. The water-proofing application work is always carried out under dusty outdoor conditions on a construction site. Accordingly, the conventional adhesive application processes usually require cleaning of the portions to be adhered. However, in practice, sufficient cleaning of the adhering portions is difficult, so that the adhesion quality of the adhered portions of the water-proofing sheets is not reliable and will cause problems after the application. Conversely, according to the present invention, since the dust or other foreign materials present in the melt bonding portions are blown off by the hot air, reliable melt bonding can be carried out without any cleaning work. Thus, the present water-proofing application process is particularly suitable for use in an outdoor construction site environment.

5. The water-proofing sheets are generally subjected to natural conditions such as sunlight, wind, and rain and, therefore, must maintain the desired requirements for a long period under such conditions. However, when the water-proofing layer is formed by a conventional adhesive application process, the adhesion strength of the adhered portions is liable to decrease with the lapse of time, and the adhered portions are separated by slight stress to lose the water-proofing function of the water-proofing layer. Contrary to this, according to the present invention, the adhesion strength of the melt bonded portions of the water-proofing sheets is not reduced for a long time and, therefore, reliable water-proofing function is maintained for a long time.

EXAMPLES

The present invention will now be further illustrated by, but is by no means limited to, the following examples, wherein "parts" means "parts by weight". In the Reference Examples, the thermoplastic elastomers used in the Examples were prepared.

Reference Example 1

A 50 part amount of ethylene-propylene-5-ethylidene--2-norbornene terpolymer rubber having an ethylene content of 80 mole%, an iodine value of 13, and a Mooney viscosity $ML_{1+4}$ (100°C) of 150, 30 parts of polypropylene having a density of 0.91 g/cm$^3$ and a melt index of 13, and 20 parts of paraffin type process oil were mixed together at a temperature of 180°C for 5 minutes under a nitrogen atmosphere in a Banbury mixer. After mixing, the mixture was rolled out and then pelleted by a sheet cutter.

To 100 parts of the pellets obtained above, 0.5 part of 1,3-bis(tert.-butylperoxyisopropyl) benzene was added and the mixture was mixed in a Henschel mixer. Then, the mixture was then extruded at a temperature of 210°C under a nitrogen atmosphere from an extruder, to prepare a partially cured thermoplastic elastomer (I).

Reference Example 2

Partially cured thermoplastic elastomer (II) was prepared from 70 parts of ethylene-propylene-5-ethylidene-2-norbornene terpolymer having an ethylene content of 79 mole%, an iodine number of 13, and a Mooney viscosity $ML_{1+4}$ (100°C) of 90, and 30 parts of polypropylene used in Reference Example 1 in the same manner as in Reference Example 1.

Examples 1 to 9 and Comparative Examples 1 to 6 The thermoplastic elastomers (I) or (II)

- 14 -                                    0143131

obtained in Reference Examples 1 and 2, various ethylene-
-alpha-olefin copolymers and, optionally carbon black
and/or heavy calcium carbonate were mixed at a
temperature of 170°C in the amounts listed in Table 1
(Examples) and Table 2 (Comparative Examples) in a
Banbury mixer.  The resultant mixtures were rolled out
and then pelleted by means of a sheet cutter.  The
resultant pellets were extruded at a temperature of
200°C through a T-die extruder to form sheets having a
thickness of 1.5 mm.

The physical properties of the resultant water-
-proofing sheets were evaluated according to JIS-K-6301
methods.

The specifications of the physical properties of
the vulcanized rubber type water-proofing sheets defined
in JIS-A-6008 are as follows:

(A)   Tensile Strength:

| Determination temp. (°C) | Spec. |
|---|---|
| -20 | less than 200% of the value at 20°C |
| 20 | 75 $kg/cm^2$ or more |
| 60 | more than 30% of the value at 20°C |

(B)   300% Modulus:

$$30 \ kg/cm^2 \ or \ more$$

(C)   Elongation at Break:

| Determination temp. (°C) | Spec. |
|---|---|
| -20 | 200% or more |
| 20 | 450% or more |

(D) Tear Strength:

| Determination temp. (°C) | Spec. |
|---|---|
| -20 | less than 200% of the value at 20°C |
| 20 | 25 kg/cm or more |
| 60 | more than 30% of the value at 20°C |

The results are shown in Table 1 (Examples) and Table 2 (Comparative Examples).

The water-proofing sheets obtained in Examples 1 to 9 and Comparative Examples 1 to 6 were applied over an indoor concrete substrate by melt bonding the overlapped portion of the sheets, under the conditions of a sheet surface temperature of 170°C to 180°C and a pressure of 20 to 21 kg/cm$^2$, by means of an automatic hot air welding machine.

The peel strengths of the melt bonded portions of the water-proofing sheets were determined under the conditions of a sample width of 25.4 mm and a peeling angle of 180°C. The results are also shown in Table 1 (Examples) and Table 2 (Comparative Examples). All the samples of Examples 1 to 9 and Comparative Examples 1 to 9 and Comparative Examples 1 and 6 were broken, whereas the samples of Comparative Examples 2 to 5 were inter-facially peeled.

## Table 1

| Example No. | | 1 | 2 | 3 | 4 | 5 | 6 | 7 | 8 | 9 |
|---|---|---|---|---|---|---|---|---|---|---|
| **Composition of Sheet Compounding Mixture** (Parts by weight) | | | | | | | | | | |
| Thermoplastic Elastomer (I) | | 60 | – | 50 | 60 | 50 | 60 | – | 60 | 60 |
| " " (II) | | – | 60 | – | – | – | – | 50 | – | – |
| Ethylene-alpha-Olefin Copolymer (I)[*1] | | 40 | 40 | – | 40 | 50 | – | 50 | – | – |
| " (II)[*2] | | – | – | 50 | – | – | 40 | – | – | – |
| " (III)[*3] | | – | – | – | – | – | – | – | 40 | – |
| " (IV)[*4] | | – | – | – | – | – | – | – | – | 40 |
| Paraffin type Process Oil | | – | 10 | – | – | – | – | – | – | – |
| Carbon Black | | 10 | 10 | 10 | – | – | – | 10 | 10 | 10 |
| Heavy Calcium Carbonate | | 20 | 20 | 20 | – | – | – | – | 20 | 20 |
| **Physical Properties of Sheet** | | | | | | | | | | |
| Density (g/cm$^3$) | | 1.04 | 1.03 | 1.05 | 0.90 | 0.90 | 0.90 | 0.90 | 1.04 | 1.05 |
| Tensile Strength (kg/cm$^2$) | −20°C | 200(174)[*5] | 214(187) | 174(139) | 276(165) | 320(176) | 305(178) | 385(191) | 195(193) | 179(152) |
| | 20°C | 115 | 114 | 125 | 167 | 182 | 171 | 202 | 101 | 118 |
| | 60°C | 57( 50)[*6] | 55(48) | 73(59) | 79(47) | 85(47) | 81(47) | 75(37) | 50(50) | 58(49) |
| 300% Modulus (kg/cm$^2$) | (20°C) | 76 | 65 | 82 | 78 | 80 | 79 | 79 | 71 | 77 |
| Elongation at Break (%) | −20°C | 240 | 230 | 210 | 340 | 290 | 320 | 310 | 250 | 250 |
| | 20°C | 670 | 670 | 640 | 740 | 790 | 700 | 780 | 680 | 680 |
| Tear Strength (kg/cm) | −20°C | 108(180)[*7] | 102(150) | 126(154) | 119(168) | 135(161) | 128(160) | 133(162) | 101(191) | 110(177) |
| | 20°C | 60 | 68 | 82 | 71 | 84 | 80 | 82 | 53 | 62 |
| | 60°C | 40(67)[*8] | 42(62) | 51(62) | 43(61) | 42(50) | 49(61) | 45(55) | 38(71) | 41(66) |
| Peel Strength at Melt Bonding Portion (kg/25.4 mm) | | 23 | 23 | 22 | 24 | 24 | 24 | 24 | 22 | 22 |

*1:  Ethylene-4-methyl-1-pentene copolymer having a
     density of 0.920 g/cm$^3$ and a melt index
     of 2.1

*2:  Ethylene-4-methyl-1-pentene copolymer having a
     density of 0.930 g/cm$^3$ and a melt index
     of 1.3

*3:  Ethylene-1-butene copolymer having a density
     of 0.925 g/cm$^3$ and a melt index of 0.6

*4:  Ethylene-1-octene copolymer having a density
     of 0.930 g/cm$^3$ and a melt index of 1.01

*5:  (Tensile strength at -20°C/Tensile strength at
     20°C) x 100%

*6:  (Tensile strength at 60°C/Tensile strength at
     20°C) x 100%

*7:  (Tear strength at -20°C/Tear strength at 20°C)
     x 100%

*8:  (Tear strength at 60°C/Tear strength at 20°C)
     x 100%

Table 2

| Comparative Example No. | | 1 | 2 | 3 | 4 | 5 | 6 |
|---|---|---|---|---|---|---|---|
| **Composition of Sheet Compounding Mixutre (Parts by weight)** | | | | | | | |
| Thermoplastic Elastomer (I) | | 80 | 60 | 80 | 50 | 50 | 100 |
| Ethylene-alpha-Olefin Copolymer (I)[*1] | | 20 | 40 | — | — | — | — |
| Polypropylene[*2] | | — | — | 20 | — | 50 | — |
| High-density Polyethylene[*3] | | — | — | — | 50 | — | — |
| Carbon Black | | 10 | 20 | 10 | — | — | — |
| Heavy Calcium Carbonate | | 20 | 30 | 20 | — | — | — |
| | | | | | | | |
| **Physical Properties of Sheet** | | | | | | | |
| Density (g/$cm^3$) | | 1.03 | 1.12 | 1.03 | 0.92 | 0.90 | 0.88 |
| Tensile Strength (kg/$cm^2$) | -20°C | 245(229)[*4] | 140(194) | 235(214) | 380(221) | 405(212) | 370(280) |
| | 20°C | 107 | 72 | 110 | 172 | 191 | 132 |
| | 60°C | 37(35)[*5] | 30(42) | 65(59) | 75(44) | 85(45) | 49(37) |
| 300% Modulus (kg/$cm^2$) | (20°C) | 69 | 67 | 89 | 90 | 92 | 67 |
| Elongation at Break (%) | -20°C | 270 | 170 | 230 | 230 | 210 | 400 |
| | 20°C | 590 | 410 | 480 | 750 | 580 | 680 |
| Tear Strength (kg/cm) | -20°C | 95(198)[*6] | 90(191) | 101(163) | 141(152) | 155(163) | 102(208) |
| | 20°C | 48 | 47 | 62 | 93 | 95 | 49 |
| | 60°C | 32(67)[*7] | 17(36) | 42(68) | 47(51) | 55(58) | 31(63) |
| Peel Strength at Melt Bonding Portion (kg/25.4 mm) | | 23 | 17 | 18 | 6 | 6 | 23 |

0143131

*1: Ethylene-4-methyl-1-pentene copolymer having a
    density of 0.920 g/cm$^3$ and a melt index
    of 2.1

*2: Polypropylene having a density of 0.910 g/cm$^2$
    and a melt index of 13

*3: High-density polyethylene having a density of
    0.954 g/cm$^2$ and a melt index of 0.9

*4: (Tensile strength at -20°C/Tensile strength at
    20°C) x 100%

*5: (Tensile strength at 60°C/Tensile strength at
    20°C) x 100%

*6: (Tear strength at -20°C/Tear strength at
    20°°C) x 100%

*7: (Tear strength at 60°C/Tear strength at 20°C)
    x 100%

CLAIMS

1. A water-proofing sheet formed from a composition comprising:

(A) 75 to 35 parts by weight of a partially cured thermoplastic elastomer obtained by dynamic heat-treatment of a mixture of 90 to 40 parts by weight of a monoolefin copolymer rubber (A) and 10 to 60 parts by weight of a polyolefin plastic (b) and

(B) 25 to 65 parts by weight of an ethylene polymer having a density of 0.910 to 0.940 g/cm$^3$.

2. A water-proofing sheet as claimed in claim 1, wherein the ethylene polymer is a copolymer of ethylene and an alpha-olefin having 4 to 8 carbon stoms.

3. A water-proofing sheet as claimed in claim 1 or 2, wherein the composition further comprises up to 50 parts by weight, based on 100 parts by weight of the total amount of the components (A) and (B), of a mineral oil type softener.

4. A water-proofing sheet as claimed in claim 1,2 or 3, wherein the composition further comprises up to 40 parts by weight, based on 100 parts by weight of total amount of the components (A) and (B), of a filler.

5. A process for applying a water-proofing sheet formed from a composition comprising (A) 75 to 35 parts by weight of a partially cured thermoplastic elastomer obtained by dynamic heat-treatment of a mixture of 90 to 40 parts by weight of a monoolefin copolymer rubber (a) and 10 to 60 parts by weight of a polyolefin plastic (b) and (B) 25 to 65 parts by weight of an ethylene polymer having a density of 0.910 to 0.940 g/cm$^3$, said process comprising:

(i) laying the water-proofing sheets over a substrate in a manner such that the water-proofing sheets at least partially overlap each other; and

(ii) allowing the water-proofing sheets to be united with each other at the overlapped portion by melt-bonding the overlapped portion of the water-
-proofing sheets under pressure while heating.

6.    A process as claimed in claim 5, wherein the ethylene polymer is a copolymer of ethylene and an alpha-olefin having 4 to 8 carbon atoms.

7.    A process as claimed in claim 5 or 6 wherein the composition further comprises up to 50 parts by weight, based on 100 parts by weight of the total amount of the components (A) and (B), of a mineral oil type softener.

8.    A process as claimed in claim 5,6 or 7 wherein the composition further comprises up to 40 parts by weight, based on 100 parts by weight of the total amount of the components (A) and (B), of a filler.

9.    A process as claimed in any of claims 5 to 8 wherein the surface temperatures of the water-proofing sheets to be united are 160°C to 220°C during the melt bonding.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-E- 30 405 (W.K. FISCHER) * Claims; column 2, lines 53-55; column 3, lines 2-14; column 8, line 26 * | 1,2 | C 08 J 5/18 C 08 L 23/16 C 08 L 23/02 |
| D,Y | US-A-3 806 558 (W.K. FISCHER) * Claims * | 1,2 | |
| Y | US-A-4 131 654 (R.M. HERMAN et al.) * Claims; column 5, line 38; column 4, lines 9-11, 35, 39-42, 47 * | 1,2 | |
| A | | 3,4 | |
| Y | BE-A- 884 383 (MONSANTO) * Claims; page 13, lines 20-24 * | 1,2 | TECHNICAL FIELDS SEARCHED (Int. Cl. ³) |
| Y | GB-A-1 466 190 (E.I. DU PONT DE NEMOURS) | 1 | C 08 J C 08 L |
| A | | 5 | |
| A | FR-A-2 197 915 (UNIROYAL) | | |

The present search report has been drawn up for all claims

| Place of search | Date of completion of the search | Examiner |
|---|---|---|
| THE HAGUE | 29-08-1984 | VAN GOETHEM G.A.J.M. |